Europäisches Patentamt

European Patent Office

Office européen des brevets

(11) Publication number: **0 300 766 B1**

# EUROPEAN PATENT SPECIFICATION

(45) Date of publication of patent specification: **25.03.92**  (51) Int. Cl.⁵: **B60P 1/44**

(21) Application number: **88306660.7**

(22) Date of filing: **20.07.88**

(54) **Improvements in vehicle tail lifts.**

(30) Priority: **20.07.87 GB 8717111**

(43) Date of publication of application:
**25.01.89 Bulletin  89/04**

(45) Publication of the grant of the patent:
**25.03.92 Bulletin  92/13**

(84) Designated Contracting States:
**AT BE CH DE ES FR GB GR IT LI LU NL SE**

(56) References cited:
**FR-A- 1 458 603
GB-A- 1 198 184
GB-A- 2 135 275
US-A- 3 913 759
US-A- 4 015 725**

(73) Proprietor: **RATCLIFF TAIL LIFTS LIMITED
Bessemer Road
Welwyn Garden City Hertfordshire AL7
1ET(GB)**

(72) Inventor: **Brooman, David Henry
90 Letchmore Road
Stevenage Hertfordshire SG1 3PT(GB)**

(74) Representative: **Alexander, Thomas Bruce et
al
Boult, Wade & Tennant 27 Furnival Street
London EC4A 1PO(GB)**

# Description

This invention relates to vehicle tail lifts.

More particularly, the invention concerns tail lifts for vehicles having an opening which gives access to the floor area of the vehicle, eg vans. It will be appreciated that the access opening may for example be at the side of the vehicle and that the term "tail lift" applies equally well in such cases.

Tail lifts for such vehicles are known. European Patent No. 0029393 and Us Patent No. 4015725 for example, show such tail lifts. The platforms and telescopic arms in these lifts are each foldable into a storage position inside the vehicle. However, it is a drawback of these lifts that when the platform is in its storage position, it creates an obstruction which denies clear access to the floor area of the vehicle.

According to the invention there is provided a vehicle tail lift of the kind having means for connection to or forming part of a vehicle and comprising a platform, means for raising and lowering the platform between the vehicle floor level and the ground level, and pivotal mounting means for pivotally mounting the platform to the raising and lowering means by a connection on one side of the platform, which platform mounting means allows pivotal movement of the platform between a deployed, substantially horizontal position and a stowed position, characterised in that said platform raising and lowering means includes a flat belt which is windable and unwindable on a rotatable mandrel.

By way of example, an embodiment of the invention will now be described with reference to the accompanying drawings, in which:

Figures 1, 2 and 3 are elevational views showing a vehicle tail lift according to the invention in its various positions of stowage and deployment,

Figures 4 and 5 are elevational views showing the drive arrangement for the telescopic arm in more detail, and

Figures 6 and 7 are views showing the mounting arrangement of the platform in more detail.

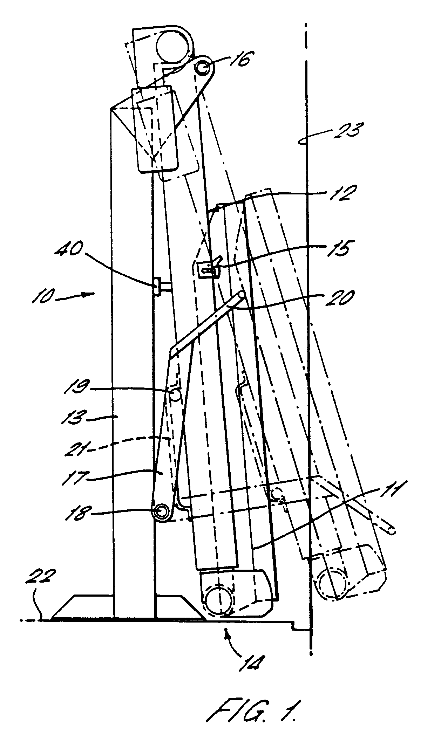

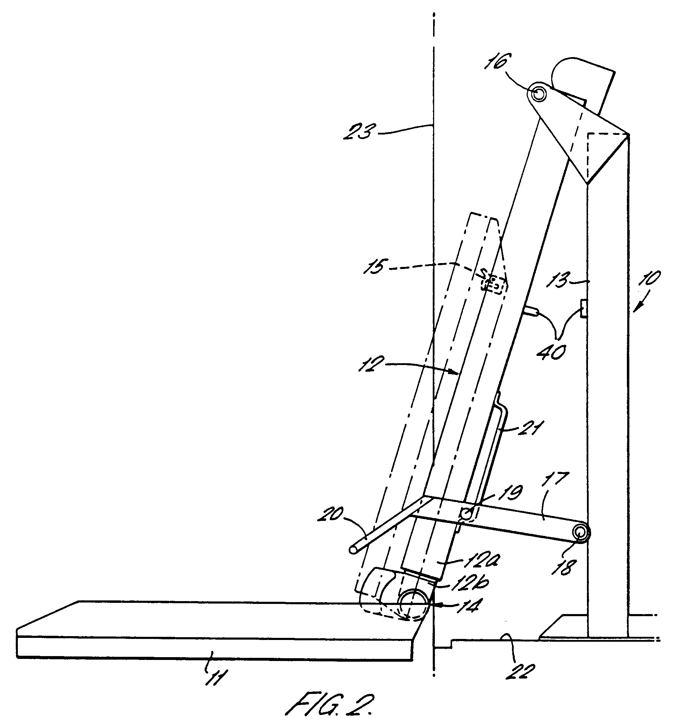

There is seen in Figures 1 to 3 a vehicle tail lift according to the present invention. The tail lift 10 comprises a platform 11, a telescopic arm 12 and a support pillar 13. The platform 11 is pivotally mounted on the lower end of the telescopic arm 12 by means of a special pivotal mounting 14. The platform 11 is pivotable between a stowed position, in which it rests alongside the telescopic arm 12 (as shown in dotted lines in Figure 2), and a deployed position, in which it is substantially horizontal (as shown in full lines in Figure 2). A releasable fastening, such as a gate latch 15, enables the platform 11 to be held relative to the telescopic arm 12 in its stowed position. The special pivotal mounting 14 for the platform 11 enables the platform to be quickly and easily detached from the telescopic arm 12 when the platform is between its deployed and stowed positions.

The telescopic arm 12 is pivotably mounted at its upper end to the pillar 13 by a pivot 16. The arm 12 is pivotable between a stowed position in which it rests alongside the pillar 13 (as shown in full lines in Figure 1) and a deployed position (as shown in dotted lines in Figure 1). For moving the arm 12 between its stowed and deployed positions, a lever 17 is provided. The lever 17 is pivotably mounted at one end on the pillar 13 by a pivot 18. Towards its other end, the lever 17 has a shaft 19 which engages a face of the arm 12. The lever 17 terminates at this other end in a handle 20. A guard 21 is provided on the arm 12 to retain and guide movement of the roller 19 relative to the face of the arm. The guard 21 also provides limits to the pivotal movement of the lever 17 and defines the deployed position of the arm 12. A releasable retaining device 40 is preferably included between the telescopic arm 12 and the pillar 13 for holding the arm in its stowed position.

It will be noted here that the lever 17 is provided as a bifurcated member which straddles the telescopic arm 12. This arrangement means that in its deployed position, the arm 12 is given lateral support by the lever 17. It will also be noted here that the pivot 16 by which the arm 12 is mounted on the pillar 13 is on the face of the pillar, rather than to one side of the pillar. This arrangment helps to reduce the torque loading on the pivot 16 which necessarily arises out of the offset mounting of the platform, which is by connection to one side only of the platform.

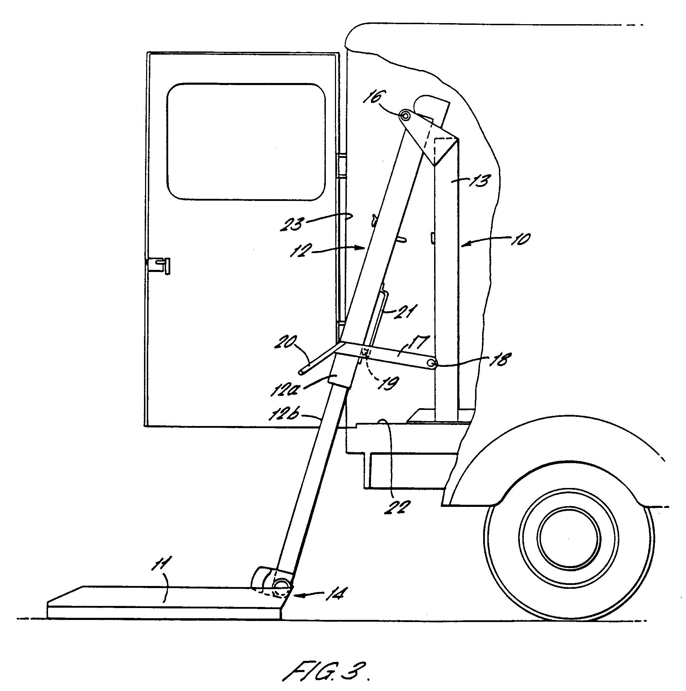

For mounting the tail lift 10 on a vehicle, the support pillar 13 is fixedly secured to the vehicle floor, indicated by line 22. The kind of vehicle for which a tail lift such as this is particularly suited is one having an opening which gives access to the vehicle floor area. An example of such a vehicle is a truck. The vehicle opening is indicated by line 23 in the drawings, and this would commonly be provided with a door or doors or shutter. The opening can of course be at any location on the vehicle, eg. the side, as well as at the rear. As will be seen in Figure 3, the telescopic arm 12 in its deployed position points generally downwardly and outwardly of the vehicle opening 23, so that the platform 11 is raisable and lowerable between the vehicle floor level 22 and the ground level.

The tail lift 10 which is shown here is provided as a unit which is easily mountable on a vehicle by its support pillar 13. It will be appreciated, however, that some mounting means other than the support pillar may be provided on the unit or alternatively, the tail lift may form part of the vehicle itself.

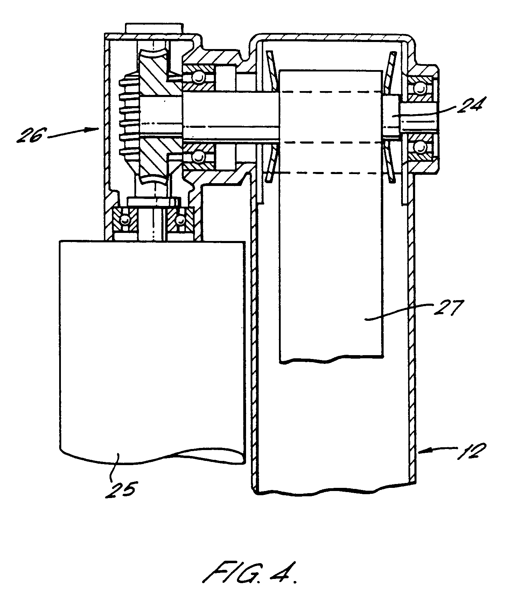

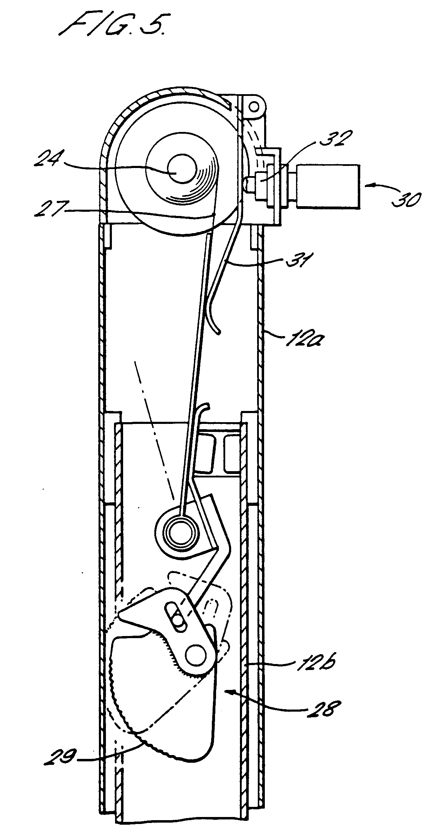

There is seen in more detail in Figures 4 and 5 the drive arrangement for extending and contracting the telescopic arm 12. The telescopic arm 12 itself comprises a top tube 12a, by which it is pivotally connected to the pillar 13, and a bottom tube 12b, to which the platform 11 is pivotally connected. Rotatably mounted within the top tube 12a is a mandrel 24. The mandrel 24 is driven by a motor 25, conveniently an electric motor, through a reduction gear box 26, which in the embodiment shown is a worm drive. Wound on the mandrel 24 is a flat belt 27 which is connected at its lower end to the bottom tube 12b of the telescopic arm. The arm 12 is extended by paying out the belt 27 and contracted by winding up the belt. The belt 27 itself may simply be similar to the kind conventionally used for vehicle seat belts. In the arrangement shown in Figure 5, the belt 27 has a single reach (between the lower tube 12b and the mandrel 24), which means that there is no need to train the belt around pulleys.

Preferably, a load safety device 28 is incorporated in the tail lift 10 to operate automatically to lock together the top and bottom tubes 12a and 12b to prevent the platform falling should the belt 27 fail. The load safety device 28 here is operatively connected between the belt 27 and the bottom tube 12b and has a serrated edge 29 which engages the top tube 12a if the belt goes slack. Of course, other load safety devices could equally well be used.

In addition to the load safety device 28, there is preferably also a limit stop device 30 which is operable automatically to stop the motor drive when the platform 11 has been fully lowered to the ground, ie. with telescopic arm 12 extended. When the platform 11 is on the ground, its weight is no longer taken by the belt 27 which therefore becomes slacker. The limit stop device 30 may therefore conveniently take the form of a tension detector. In Figure 5, the device 30 is seen as a biased pivotable arm 31 which is actuable to operate a switch 32 when belt tension slackens.

Preferably, there is in addition a limit stop device which is operable automatically to stop the motor drive when the platform 11 has been fully raised, ie., with the telescopic arm 12 retracted. Where the motor 25 is an electric motor, such limit stop device may conveniently comprise a current detector circuit which is built into the control circuitry for the lift and which is actuable to cut off current supply to the motor if a predetermined amperage is exceeded. Also, the limit stop device acts to prevent overloading of the motor in use of the lift.

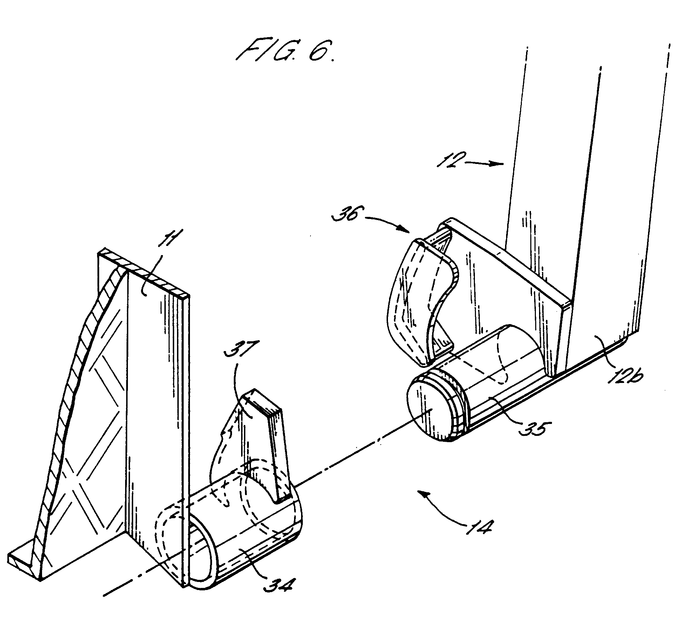

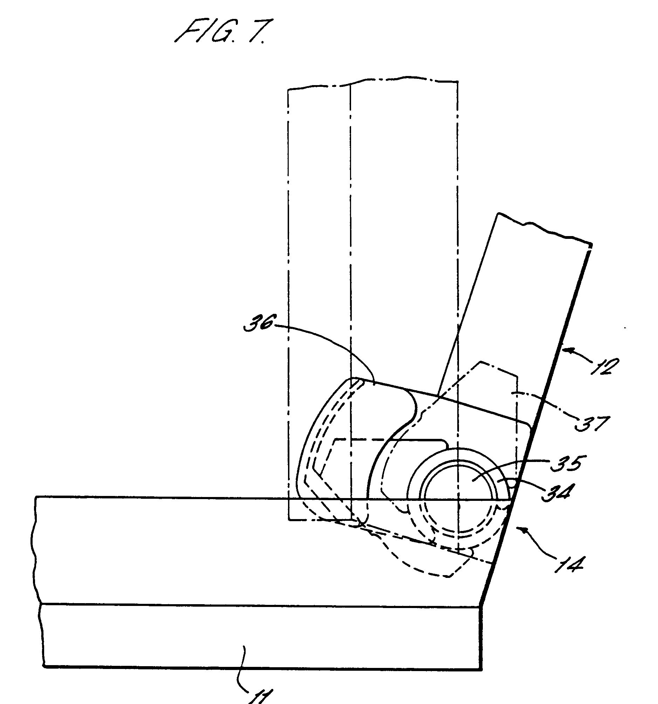

An advantage of the drive arrangment shown for the mandrel 24 is that the reduction gearing 26 is only drivable one way, ie., driving the mandrel 24 by the motor. (The mandrel 24 cannot drive the motor 25 via the reduction gearing 26). This means that the drive arrangement is inherently braked, making the need for a separate braking system unnecessary. This makes it easy to allow the platform 11 to be held at any height in between its upper and lower limits. The motor 25 is of course reversible, to enable winding up and paying out of the belt 27. Where the motor is an electric motor, reversal of the motor is conveniently accomplished using power transistors in the control circuitry for the lift and the power transistors preferably also are used for switching the motor on and off. There is seen in more detail in Figures 6 and 7 the special pivotal mounting 14 for the platform 11. On the side of the platform 11 there is a tube 34. A shaft 35 provided on the bottom of the telescopic arm 12b can be journalled in the tube 34. Also on the bottom tube 12b of the telescopic arm is a retainer cage 36. The retainer cage 36 is shaped to cooperate with a key plate 37 provided on the tube 34 on the platform 11. Cooperation between the retainer cage 36 and key plate 37 performs two functions. The first is to hold the platform 11 generally horizontally when it is in its deployed position. (This is seen in full lines in Figure 7). The second is to allow detachment of the platform 11, but only under certain conditions. As will be seen in Figure 7 of the drawings, when the platform 11 is swung towards the telescopic arm 12, the key plate 37 clears the retainer cage 36. This means that the way is clear to engage or disengage the shaft 35 in the tube 34, ie. to attach or detach the platform 11 when it is between its stowed and deployed positions. When the platform is in its deployed position, however, the retainer cage 36 blocks the key plate 37 and thereby prevents detachment of the platform. In practice, the platform in the embodiment shown in the drawings is detachable when it is at an angle of between about 60° or 70° from the horizontal until just before it engages the gate latch 15 in its stowed position.

One of the advantages of having a readily detachable platform is that it enables the floor area of the vehicle to be left with completely clear access when the lift is not in use. The platform, once detached, can be simply stowed out of the way inside the vehicle.

A useful further feature of the pivotable platform mounting 14 here is the fact that it is offset. This means that when the platform 11 is rotated to its deployed position, with the telescopic arm already in its deployed position, the platform is automatically aligned with the vehicle floor level 22. This can be seen in Figure 2. This avoids the need for any preliminary level adjustment by operation of the telescopic arm 12 after deployment of the platform 11.

Further preferred features of the tail lift 10 include an isolation switch device which is operable when the telescopic arm 12 is in its stowed position automatically to prevent extension of the arm. Also, there is preferably included a temperature detector operable automatically to prevent operation of the motor upon sensing a predetermined temperature, eg, should the lift be used excessively. The thermal cut out is seen in Figure and is represented by reference F. The controls by which an operator uses the lift preferably consist of electronic ie. low voltage, buttons or switches connected up to the motor and battery via a printed circuit board. The tail lift, when provided as a unit installable in a vehicle, would simply be connected up to a battery housed in the vehicle.

To use the tail lift 10, an operator grasps the handle 20 and rotates the lever 17 downwardly to move the telescopic arm 12 from its stowed position to its deployed position. The operator then releases the catch 15 and rotates the platform 11 downwardly from its stowed position to its deployed position. This stage in seen in Figure 2. The platform 11 can now be loaded and lowered to the ground by extension of the telescopic arm 12. This stage is seen in Figure 3. After use, the telescopic arm 12 is retracted and returned to its stowed position. The platform 11 is rotated to its stowed position, from which it can then be detached from the telescopic arm 12, leaving clear access to the vehicle floor.

## Claims

1. A vehicle tail lift (10) of the kind having means for connection to or forming part of a vehicle and comprising a platform (11), means (12) for raising and lowering the platform between the vehicle floor level and the ground level, and pivotal mounting means (14) for pivotally mounting the platform to the raising and lowering means by a connection on one side of the platform, which platform mounting means allows pivotal movement of the platform between a deployed, substantially horizontal position and a stowed position, characterised in that said platform raising and lowering means includes a flat belt (27) which is windable and unwindable on a rotatable mandrel (24).

2. A tail lift (10) as claimed in Claim 1 wherein the means for connection to a vehicle comprises a pillar (13) to be fixed to the vehicle, the platform raising and lowering means (12) being connected to the pillar.

3. A tail lift (10) as claimed in Claim 1 or Claim 2 wherein the platform (11) raising and lowering means comprises a telescopic arm (12).

4. A tail lift (10) as claimed in Claim 3 wherein the telescopic arm (12) is mounted for pivotal movement between a deployed position in which the arm extends generally downwardly and outwardly of the vehicle and a retracted position.

5. A tail lift (10) as claimed in Claim 4 wherein the platform mounting means (14) is arranged so that when the telescopic arm (12) is moved to its deployed position and the platform (11) is moved to its deployed position, the working surface of the platform is automatically level with the vehicle floor level.

6. A tail lift (10) as claimed in any one of the preceding claims and including releasable latch means (15) for holding the platform (11) to the raising and lowering means (12) in the stowed position of the platform.

7. A tail lift (10) as claimed in any one of Claims 4 to 6 and including releasable latch means (15) for holding the telescopic arm (12) to the pillar (13) in the retracted position of the telescopic arm.

8. A tail lift (10) as claimed in any one of Claims 4 to 7 wherein the means for holding the telescopic arm (12) in its deployed position comprises a lever (17) which is pivotally mounted on the pillar (13) and which has a cam surface (19) to engage the telescopic arm, and the lever is movable between first and second positions corresponding to the retracted and deployed positions of the telescopic arm.

9. A tail lift (10) as claimed in Claim 8 wherein the lever (17) is bifurcated and is arranged to straddle the telescopic arm (12) and provide lateral support for the telescopic arm in its deployed position.

10. A tail lift (10) as claimed in Claim 8 or Claim 9 wherein the cam surface of the lever (17) is in the form of a roller (19) and guide means (21) is provided to retain the roller in engagement with the telescopic arm (12) and provide limits to the movement of the lever defining its first and second positions.

11. A tail lift (10) as claimed in any one of Claims 4 to 10 and including isolation switch means operable automatically to prevent operation of the telescopic arm (12) when it is in its retracted position.

**12.** A tail lift (10) as claimed in any one of the preceding claims wherein the belt (27) has a single reach.

**13.** A tail lift (10) as claimed in any one of the preceding claims wherein the mandrel (24) is rotatable by means of a motor (25) which delivers drive through reduction gearing (26).

**14.** A tail lift (10) as claimed in claim 13 wherein the reduction gearing (26) consists of a worm drive which is operable to transmit drive from the motor (25) to the mandrel (27) but not allow drive in the opposite sense, and the motor is rotatable in forward and reverse directions.

**15.** A tail lift (10) as claimed in claim 14 wherein the motor (25) is an electric motor and power transistors are provided for reversing the direction of rotation of the motor.

**16.** A tail lift (10) as claimed in claim 15 and including limit stop means capable of detecting electric current and operable automatically to cease motor drive upon sensing a predetermined amperage.

**17.** A tail lift (10) as claimed in claim 15 or claim 16 and including safety cut-off means (F) capable of detecting temperature and operable automatically to prevent operation of the motor upon sensing a predetermined temperature.

**18.** A tail lift (10) as claimed in any one of the preceding claims comprising limit stop means (30) capable of detecting tension in the belt (27) and operative automatically to cease motor drive upon sensing a predetermined slackness in the belt.

**19.** A tail lift (10) as claimed in any one of the preceding claims comprising safety stop means (28) capable of detecting tension in the belt (27) and operative automatically to prevent the platform from falling in the event of belt failure.

**20.** A tail lift (10) as claimed in any one of claims 3 to 19 wherein the telescopic arm (12) is operable by winding up and paying out said flat belt (27).

**21.** A tail lift (10) as claimed in claim 20 wherein the flat belt (27) is arranged to operate within the telescopic arm (12).

**22.** A tail lift (10) as claimed in any one of the preceding claims in which the platform (11) is detachably mounted to the raising and lowering means (12) by the connection on one side of the platform, which platform mounting means allows pivotal movement of the platform, and said platform mounting means (14) enables the platform to be readily detached from the raising and lowering means when the platform is between its deployed and stowed positions but prevents detachment of the platform in its deployed position.

**Revendications**

**1.** Elévateur pour l'arrière d'un véhicule (10) du type comportant un moyen pour raccordement à un véhicule ou formant partie d'un véhicule et comprenant une plate-forme (11), un moyen (12) pour lever et abaisser la plate-forme entre le plancher du véhicule et le sol, et un moyen de fixation pivotant (14) pour fixer sur pivot la plate-forme (11) au moyen de levage et d'abaissement par une connexion sur un côté de la plate-forme, lequel moyen de fixation de plateforme permet un pivotement de la plate-forme entre une position déployée, sensiblement horizontale et une position repliée, caractérisé en ce que ledit moyen de levage et d'abaissement de plate-forme comprend une sangle plate (27) qui peut être enroulée sur un mandrin rotatif (24) et déroulée dudit mandrin.

**2.** Elévateur pour l'arrière d'un véhicule (10) selon la revendication 1, dans lequel le moyen pour raccordement à un véhicule comprend un montant (13) à fixer au véhicule, le moyen (12) de levage et d'abaissement de la plate-forme étant relié au montant.

**3.** Elévateur pour l'arrière d'un véhicule (10) selon la revendication 1 ou 2, dans lequel le moyen de levage et d'abaissement de la plate-forme (11) comprend un bras télescopique (12).

**4.** Elévateur pour l'arrière d'un véhicule (10) selon la revendication 3, dans lequel le bras télescopique (12) est monté pour pivoter entre une position déployée dans laquelle le bras s'étend généralement vers le bas et vers l'extérieur du véhicule et une position rétractée.

**5.** Elévateur pour l'arrière d'un véhicule (10) selon la revendication 4, dans lequel le moyen (14) de fixation de plate-forme est agencé de manière que lorsque le bras télescopique (12) est déplacé en sa position déployée et la plate-forme (11) est déplacée en sa position déployée, la surface effective de la plate-forme est automatiquement de niveau avec le plancher du véhicule.

6. Elévateur pour l'arrière d'un véhicule (10) selon l'une quelconque des revendications précédentes et comprenant un moyen de verrouillage débrayable (15) pour fixer la plate-forme (11) au moyen de levage et d'abaissement (12) dans la position repliée de la plate-forme.

7. Elévateur pour l'arrière d'un véhicule (10) selon l'une quelconque des revendications 4 à 6 et comprenant un moyen de verrouillage débrayable (15) pour fixer le bras télescopique (12) au montant (13) dans la position rétractée du bras télescopique.

8. Elévateur pour l'arrière d'un véhicule (10) selon l'une quelconque des revendications 4 à 7 dans lequel le moyen pour fixer le bras télescopique (12) dans sa position déployée comprend un levier (17) qui est monté de manière à pivoter sur le montant (13) et qui comporte une surface de came (19) pour engager le bras télescopique, et le levier est mobile entre une première et une seconde position correspondant à la position rétractée et à la position déployée du bras télescopique.

9. Elévateur pour l'arrière d'un véhicule (10) selon la revendication 8, dans lequel le levier (17) bifurque et est agencé pour enjamber le bras télescopique (12) et former un support latéral pour le bras télescopique dans sa position déployée.

10. Elévateur pour l'arrière d'un véhicule (10) selon la revendication 8 ou 9, dans lequel la surface de came du levier (17) a la forme d'un rouleau (19) et un moyen de guidage (21) est prévu pour retenir le rouleau en engagement avec le bras télescopique (12) et limiter le déplacement du levier en déterminant sa première et sa seconde position.

11. Elévateur pour l'arrière d'un véhicule (10) selon l'une quelconque des revendications 4 à 10, et comprenant un interrupteur-séparateur automatique pour empêcher le fonctionnement du bras télescopique (12) lorsqu'il se trouve dans sa position rétractée.

12. Elévateur pour l'arrière d'un véhicule (10) selon l'une quelconque des revendications précédentes, dans lequel la sangle (27) a une seule extension.

13. Elévateur pour l'arrière d'un véhicule (10) selon l'une quelconque des revendications précédentes, dans lequel le mandrin (24) est tourné au moyen d'un moteur (25) qui fournit l'entraînement vie un train réducteur (26).

14. Elévateur pour l'arrière d'un véhicule (10) selon la revendication 13, dans lequel le train réducteur (26) consiste en une transmission à vis sans fin qui peut être actionnée pour transmettre l'entraînement du moteur (25) au mandrin (24) mais pas du mandrin au moteur, et le moteur peut tourner dans les deux sens.

15. Elévateur pour l'arrière d'un véhicule (10) selon la revendication 14, dans lequel le moteur (25) est un moteur électrique et des transistors de puissance sont prévus pour inverser le sens de rotation du moteur.

16. Elévateur pour l'arrière d'un véhicule (10) selon la revendication 15 et comprenant un limiteur capable de détecter le courant électrique et arrêtant automatiquement l'entraînement du moteur quand est décelée une intensité de courant prédéterminée.

17. Elévateur pour l'arrière d'un véhicule (10) selon la revendication 15 ou 16 et comprenant un coupe-circuit de sécurité (F) capable de détecter la température et empêchant automatiquement le fonctionnement du moteur quand est décelée une température prédéterminée.

18. Elévateur pour l'arrière d'un véhicule (10) selon l'une quelconque des revendications précédentes, comprenant un limiteur (30) capable de détecter la tension dans la sangle (27) et arrêtant automatiquement l'entraînement du moteur quand est décelée un relâchement prédéterminé dans la sangle.

19. Elévateur pour l'arrière d'un véhicule (10) selon l'une quelconque des revendications précédentes, comprenant un coupe-circuit de sécurité (28) capable de détecter la tension dans la sangle (27) et empêchant automatiquement la plate-forme (11) de tomber en cas de défaillance de la sangle.

20. Elévateur pour l'arrière d'un véhicule (10) selon l'une quelconque des revendications 3 à 19, dans lequel le bras télescopique (12) peut être actionné en renvidant et en dévidant ladite sangle plate (27).

21. Elévateur pour l'arrière d'un véhicule (10) selon la revendication 20, dans lequel la sangle plate (27) est agencée pour fonctionner au sein du bras télescopique (12).

22. Elévateur pour l'arrière d'un véhicule (10) selon l'une quelconque des revendications prédédentes, dans lequel la plate-forme (11) est fixée de manière amovible au moyen de levage et d'abaissement (12) par la connexion sur un côté de la plate-forme, lequel moyen de fixation de plate-forme permet un pivotement de la plate-forme, et ledit moyen (14) de fixation de plate-forme permet à la plate-forme d'être facilement détachée du moyen de levage et d'abaissement lorsque la plate-forme se trouve entre sa position déployée et sa position repliée mais empêche le détachement de la plate-forme dans sa position déployée.

## Patentansprüche

1. Lift für ein Fahrzeugheck (10) mit Mitteln zur Verbindung mit einem Teil des Fahrzeugs oder die einen solchen bilden, umfassend eine Plattform (11), Mittel (12) zum Anheben und Absenken der Plattform zwischen dem Fahrzeugbodenniveau und dem Erdbodenniveau, und schwenkbare Befestigungsmittel (14) zur schwenkbaren Befestigung der Plattform an den anhebenden und absenkenden Mitteln durch eine Verbindung an einer Seite der Plattform, wobei die Plattformbefestigungsmittel die schwenkende Bewegung der Plattform erlauben zwischen einer ausgeschwenkten, im wesentlichen horizontalen Position und einer verstauten Position, **dadurch gekennzeichnet,** daß die die Plattform anhebenden und absenkenden Mittel einen flachen Gurt (27) beinhalten, welcher auf einer drehbaren Welle (24) auf und abwickelbar ist.

2. Hecklift (10) gemäß Anspruch 1, **dadurch gekennzeichnet,** daß die Mittel zur Verbindung mit einem Fahrzeug einen an dem Fahrzeug zu befestigenden Ständer (13) umfassen, wobei die die Plattform anhebenden und absenkenden Mittel (12) mit dem Ständer verbunden sind.

3. Hecklift (10) gemäß Anspruch 1 oder Anspruch 2, **dadurch gekennzeichnet,** daß die die Plattform (11) anhebenden und absenkenden Mittel einen Teleskoparm (12) umfassen.

4. Hecklift (10) gemäß Anspruch 3, **dadurch gekennzeichnet,** daß der Teleskoparm (12) zwischen einer ausgeschwenkten Position, in welcher der Arm sich generell vom Fahrzeug abwärts und auswärts erstreckt, und einer eingezogenen Position verschwenkbar ist.

5. Hecklift (10) gemäß Anspruch 4, **dadurch gekennzeichnet,** daß die die Plattform befestigenden Mittel (14) derart angeordnet sind, daß bei der Bewegung des Teleskoparms (12) in seine ausgeschwenkte Position und bei der Bewegung der Plattform (11) in ihre ausgeschwenkte Position, die Arbeitsfläche automatisch auf dem Niveau des Fahrzeugbodenniveaus ist.

6. Hecklift (10) gemäß einem der vorstehenden Ansprüche, **gekennzeichnet durch** lösbare Rast- bzw. Verriegelungsmittel (15) zum Halte der Plattform (11) an den anhebenden und absenkenden Mitteln (12) in der verstauten Position der Plattform.

7. Hecklift (10) gemäß einem der vorstehenden Ansprüche von 4 bis 6, **gekennzeichnet durch** lösbare Rast- bzw. Verriegelungsmittel zum Halten des Teleskoparms (12) an dem Ständer (13) in der zurückgezogenen Position des Teleskoparms.

8. Hecklift (10) gemäß einem der vorstehenden Ansprüche 4 bis 7, **dadurch gekennzeichnet,** daß die Mittel zum Halten des Teleskoparms (12) in seiner ausgeschwenkten Position einen Hebel (17) umfassen, welcher an dem Ständer (13) schwenkbar befestigt ist und welcher eine Mitnehmeroberfläche (19) aufweist, um mit dem Teleskoparm in Eingriff zu stehen, und der Hebel bewegbar ist zwischen ersten und zweiten Positionen korrespondierend zu der eingezogenen und ausgeschwenkten Position des Teleskoparms.

9. Hecklift (10) gemäß Anspruch 8, **dadurch gekennzeichnet,** daß der Hebel (17) gegabelt ist und angeordnet ist um den Teleskoparm (12) zu umgreifen und in seiner ausgeschwenkten Position seitlich zu stützen.

10. Hecklift (10) gemäß Anspruch 0 oder 9, **dadurch gekennzeichnet,** daß die Mitnehmeroberfläche des Hebels (17) in der Form einer Rolle (19) ist und Führungsmittel (21) bereitgestellt sind, um die Rolle im Eingriff mit dem Teleskoparm (12) zu halten und Grenzen der Bewegung des Hebels, erste und zweite Positionen definierend, zur Verfügung zu stellen.

11. Hecklift (10) gemäß einem der Ansprüche 4 bis 10, **gekennzeichnet durch** automatisch wirkende Trennschaltmittel, um den Betrieb des Teleskoparms (12) in seiner eingezogenen Position zu verhindern.

12. Hecklift (10) gemäß einem der vorstehenden Ansprüche, **dadurch gekennzeichnet,** daß der Gurt (27) eine einfache Längenerstreckung hat.

13. Hecklift (10) gemäß einem der vorstehenden Ansprüche, **dadurch gekennzeichnet,** daß die Welle (24) durch Einwirkung eines Motors (25) drehbar ist, welcher den Antrieb durch ein Untersetzungsgetriebe (26) liefert.

14. Hecklift (10) gemäß Anspruch 13, **dadurch gekennzeichnet,** daß das Untersetzungsgetriebe (26) aus einem Schneckentrieb besteht, durch welchen ein Drehmoment vom Motor (25) auf die Welle (27), aber nicht in umgekehrter Richtung übertragbar ist, und der Motor in Vorwärts- und Rückwärtsrichtung drehbar ist.

15. Hecklift (10) gemäß Anspruch 14, **dadurch gekennzeichnet,** daß der Motor (25) ein Elektromotor ist und Leistungstransistoren vorgesehen sind zur Umkehr der Richtung der Drehung des Motors.

16. Hecklift (10) gemäß Anspruch 15, **gekennzeichnet durch** Grenzwertschaltmittel, fähig zur Detektion eines elektrischen Stroms und automatisch betreibbar, um den Motorantrieb bei Erfassen eines vorbestimmten Strowmertes abzuschalten.

17. Hecklift (13) gemäß Anspruch 15 oder Anspruch 16, **gekennzeichnet durch** Sicherheitsabschaltmittel (F), fähig zur Temperaturdetektion und automatisch betreibbar zum Verhindern des Betriebs des Motors bei Erfassen einer vorbestimmten Temperatur.

18. Hecklift (10) gemäß einem der vorstehenden Ansprüche, **gekennzeichnet durch** Grenzabschaltmittel (30), fähig zur Detektion der Spannung in dem Gurt (27) und automatisch betreibbar, um den Motorantrieb bei Erfassen eines vorbestimmten Lockerseins des Gurtes abzuschalten.

19. Hecklift (10) gemäß einem der vorstehenden Ansprüche, **gekennzeichnet durch** Sicherheitsstoppmittel (28), fähig zur Detektion der Spannung in dem Gurt (27) und automatisch betrieben, um die Plattform im Falle eines Gurtausfalls davor zu bewahren zu fallen.

20. Hecklift (10) gemäß einem der vorstehenden Ansprüche 3 bis 19, **dadurch gekennzeichnet,** daß der Teleskoparm (12) durch Aufwik-

keln und Abwickeln des flachen Gurtes (27) betreibbar ist.

21. Hecklift (10) gemäß Anspruch 20, **dadurch gekennzeichnet,** daß dar flache Gurt (27) angeordnet ist, um innerhalb des Teleskoparms (12) zu arbeiten.

22. Hecklift (10) gemäß einem der vorstehenden Ansprüche, **dadurch gekennzeichnet,** daß die Plattform (11) lösbar an den anhebenden und absenkenden Mitteln durch Verbindung an einer Seite der Plattform gehalten ist, wobei die die Plattform haltenden Mittel die schwenkbare Bewegung der Plattform erlauben und die die Plattform haltenden Mittel (14) es der Plattform ermöglichen, leicht von den anhebenden und absenkenden Mitteln gelöst zu werden, wenn die Plattform zwischen ihrer ausgeschwenkten und verstauten Position ist, aber das Lösen der Plattform in ihrer ausgeschwenkten Position verhindern.

EP 0 300 766 B1

FIG. 1.

FIG. 2.

EP 0 300 766 B1

FIG. 3.

FIG. 4.

FIG. 5.

FIG. 6.

FIG. 7.